# EUROPÄISCHE PATENTSCHRIFT

(11) **EP 1 771 643 B1**
(45) Veröffentlichungstag und Bekanntmachung des Hinweises auf die Patenterteilung: **31.10.2007**
(21) Anmeldenummer: 05773107.7
(22) Anmeldetag: 20.07.2005
(51) Int. Cl.: F01M 13/02, F01M 13/04, F02M 25/06, F02M 25/08

(54) **KURBELGEHAEUSEENTLUEFTUNG FUER EINE BRENNKRAFTMASCHINE MIT EINEM ABGASTURBOLADER**
CRANKCASE VENTILATOR FOR AN INTERNAL COMBUSTION ENGINE COMPRISING AN EXHAUST GAS TURBOCHARGER
VENTILATION DE CARTER DE VILEBREQUIN DESTINEE A UN MOTEUR A COMBUSTION INTERNE COMPORTANT UN TURBOCOMPRESSEUR

(30) Priorität: 29.07.2004 DE 20411882 U
(43) Veröffentlichungstag der Anmeldung: 11.04.2007
(73) Patentinhaber: Hengst GmbH & Co. KG, 48147 Münster (DE); Volkswagen Aktiengesellschaft, 38436 Wolfsburg (DE)
(72) Erfinder: MAY, Thomas, 48565 Steinfurt (DE); GÜMMER, Ralf, 38547 Calberlah (DE); VOELTZ, Stefan, 38116 Braunschweig (DE); GRÖER, Hans-Günter, 38542 Leiferde (DE); SCHULZ, Bodo, 38536 Meinersen (DE)
(74) Vertreter: Linnemann, Winfried
(86) Internationale Anmeldenummer: PCT/EP2005/007915
(87) Internationale Veröffentlichungsnummer: WO 2006/013006

(56) Entgegenhaltungen:
- EP-A- 1 327 753
- DE-A- 10 154 666
- DE-A- 19 546 545
- US-A1- 2004 112 346

## Beschreibung

Die vorliegende Erfindung betrifft eine Kurbelgehäuseentlüftung für eine Brennkraftmaschine mit einem Abgasturbolader, wobei in einer Ansaugluftleitung der Brennkraftmaschine in Ansaugluftströmungsrichtung gesehen hinter dem Abgasturbolader eine Drosselklappe angeordnet ist, mit einer ersten und einer zweiten Kurbelgehäuseentlüftungsleitung, die einerseits mit dem Kurbelgehäuse und andererseits über je ein Ventil mit der Ansaugluftleitung verbunden sind, wobei die erste Kurbelgehäuseentlüftungsleitung stromab der Drosselklappe und die zweite Kurbelgehäuseentlüftungsleitung stromauf des Abgasturboladers in die Ansaugluftleitung mündet.

Eine Kurbelgehäuseentlüftung der eingangs genannten Art ist aus der DE 101 54 666 A1 bekannt. Mit dieser bekannten Kurbelgehäuseentlüftung wird bei einer Brennkraftmaschine, die mit einem Abgasturbolader ausgestattet ist, erreicht, daß in allen Betriebszuständen der Brennkraftmaschine das Kurbelgehäuseentlüftungsgas aus dem Kurbelgehäuse abgeführt werden kann, um im Kurbelgehäuse einen vorgebbaren Unterdruck relativ zum Umgebungsluftdruck einzuhalten.

Die bekannte Kurbelgehäuseentlüftung kann allerdings bei einer Brennkraftmaschine, die neben dem Abgasturbolader zusätzlich mit einem Kompressor ausgestattet ist, nicht mehr für eine zuverlässige Entlüftung und Druckregelung im Kurbelgehäuse der Brennkraftmaschine bei allen Betriebszuständen sorgen. Bei bestimmten Betriebszuständen der Brennkraftmaschine, insbesondere bei niedriger Drehzahl und hoher Last, treten in den Bereichen der Ansaugluftleitung, in die die beiden Kurbelgehäuseentlüftungsleitungen einmünden, Drücke auf, die eine Kurbelgehäuseentlüftung nicht erlauben. Hierdurch kann es im Kurbelgehäuse zu einem unerwünschten und schädlichen Überdruck kommen.

Eine Brennkraftmaschine, die zur Aufladung sowohl mit einem Abgasturbolader als auch mit einem Kompressor ausgestattet ist, ist an sich aus der DE 697 12 317 T2 bekannt. Dieses Dokument gibt aber keinerlei Hinweise, wie eine Entlüftung des Kurbelgehäuses erfolgen soll.

Die US 6 457 462 B2 offenbart eine aufgeladene Brennkraftmaschine, bei der die Aufladung durch einen Abgasturbolader erfolgt. Wie bei dem oben an erster Stelle zitierten Dokument zum Stand der Technik erfolgt auch hier die Kurbelgehäuseentlüftung über zwei Kurbelgehäuseentlüftungsleitungen, von denen eine stromab der Drosselklappe und die andere stromauf des Abgasturboladers in die Ansaugluftleitung mündet. Zusätzlich wird in diesem Dokument eine Tankentlüftung beschrieben, bei der ein Kraftstofftank über eine Entlüftungsleitung entlüftet werden kann, die in die Kurbelgehäuseentlüftungsleitung einmündet, die stromab der Drosselklappe in die Ansaugluftleitung führt. Auch bei dieser Brennkraftmaschine stellt sich das Problem, daß bei zusätzlicher Ausrüstung mit einem Kompressor eine stetige Entlüftung des Kurbelgehäuses und eine zuverlässige Einhaltung eines vorgegebenen Kurbelgehäusedrucks nicht mehr gewährleistet ist.

Schließlich ist aus der DE 102 49 720 A1 ein Kurbelgehäusedruckregelventil bekannt, das für eine Brennkraftmaschine mit einem Abgasturbolader vorgesehen ist. Ein erster, gemeinsamer Entlüftungsleitungsabschnitt führt vom Kurbelgehäuse zum Druckregelventil. Das Druckregelventil hat einen mit einem Ventilkörper zusammenwirkenden Ventilsitz, der einen ersten Ausgangskanal und einen zweiten Ausgangskanal aufweist. Der zweite Ausgangskanal ist dabei konzentrisch um den ersten Ausgangskanal herum angeordnet. Der eine Ausgangskanal führt vom Druckregelventil stromab der Drosselklappe in die Ansaugluftleitung, während der andere Ausgangskanal stromauf des Abgasturboladers in die Ansaugluftleitung mündet. Auch mit diesem Druckregelventil kann bei zusätzlicher Ausstattung der zugehörigen Brennkraftmaschine mit einem Kompressor keine zuverlässige Kurbelgehäuseentlüftung und Kurbelgehäusedruckregelung erreicht werden.

Für die vorliegende Erfindung stellt sich deshalb die Aufgabe, eine Kurbelgehäuseentlüftung der eingangs genannten Art anzugeben, mit der bei einer Brennkraftmaschine, die neben einem Abgasturbolader auch mit einem Kompressor ausgestattet ist, in allen Betriebszuständen der Brennkraftmaschine eine stetige Kurbelgehäuseentlüftung und eine zuverlässige Kurbelgehäusedruckregelung gewährleistet ist.

Die Lösung dieser Aufgabe gelingt erfindungsgemäß mit einer Kurbelgehäuseentlüftung der eingangs genannten Art, die dadurch gekennzeichnet ist, daß eine dritte Kurbelgehäuseentlüftungsleitung vorgesehen ist, die einerseits mit dem Kurbelgehäuse und andererseits über ein Ventil mit der Ansaugluftleitung stromauf eines bei der Brennkraftmaschine zusätzlich vorgesehenen, stromauf des Abgasturboladers in der Ansaugluftleitung liegenden Kompressors verbunden ist.

Mit der erfindungsgemäßen Kurbelgehäuseentlüftung wird vorteilhaft erreicht, daß in jedem Betriebszustand der zugehörigen Brennkraftmaschine das Kurbelgehäuse stetig entlüftet werden kann und daß so im Kurbelgehäuse stets ein schädlicher Druck über einem vorgegebenen Unterdruck relativ zum Umgebungsluftdruck vermieden werden kann. Dabei erfolgt die Entlüftung des Kurbelgehäuses jeweils über mindestens eine der drei Kurbelgehäuseentlüftungsleitungen, wobei die aktuelle Strömungsführung der Kurbelgehäuseentlüftungsgase durch die Kurbelgehäuseentlüftungsleitungen von den aktuellen Druckverhältnissen in den Bereichen der Ansaugluftleitung abhängen, in die die drei Kurbelgehäuseentlüftungsleitungen einmünden. Eine Kurbelgehäuseentlüftung über die erste Kurbelgehäuseentlüftungsleitung, die stromab der Drosselklappe in die Ansaugluftleitung mündet, erfolgt immer dann, wenn die Brennkraftmaschine im Saugbetrieb arbeitet. Ein Saugbetrieb der Brennkraftmaschine stellt sich bei geschlossener und bei teilweise offener Drosselklappe ein. Über die zweite Kurbelgehäuseentlüftungsleitung erfolgt die Entlüftung des Kurbelgehäuses immer dann, wenn der Kompressor außer Betrieb ist und der Abgasturbolader in Betrieb ist. Dies ist der Betriebsbereich der Brennkraftmaschine oberhalb der Mindestdrehzahl des Turboladers bis zum Vollastbetrieb. Bei niedrigen Drehzahlen und hoher Last der Brennkraftmaschine wird der Kompressor aktiv und der Turbolader ist dann ohne Wirkung. Bei diesem Betriebszustand erfolgt die Kurbelgehäuseentlüftung über die erfindungsgemäß vorgesehene dritte Kurbelgehäuseentlüftungsleitung, die stromauf des Kompressors mit der Ansaugluftleitung verbunden ist. Damit erfolgt auch in diesem Betriebszustand eine wirksame Entlüftung des Kurbelgehäuses, obwohl stromab des Kompressors bis hin zur Brennkraftmaschine ein Überdruck in der Ansaugluftleitung herrscht.

Um den technischen Aufwand und damit die Gefahr von Funktionsstörungen der Kurbelgehäuseentlüftung möglichst niedrig zu halten, ist bevorzugst vorgesehen, daß die Ventile, über die die Kurbelgehäuseentlüftungsleitungen jeweils mit der Ansaugluftleitung verbunden sind, Rückschlagventile sind. Die Verstellung der Rückschlagventile erfolgt ohne aktive Elemente einfach durch die Druckdifferenz auf den beiden Seiten der Ventile, wodurch eine sehr einfache und gleichzeitig zuverlässig funktionierende Führung des Kurbelgehäuseentlüftungsgases in den jeweils passenden Bereich der Ansaugluftleitung erreicht wird.

Weiter ist bevorzugt vorgesehen, daß die drei Kurbelgehäuseentlüftungsleitungen in einem vom Kurbelgehäuse ausgehenden ersten Abschnitt durch eine gemeinsame Leitung gebildet sind und daß im Verlauf dieses ersten Abschnitts ein Ölnebelabscheider und ein Kurbelgehäusedruckregelventil angeordnet sind. In dieser Ausgestaltung wird der spezifische Vorteil erreicht, daß für die Kurbelgehäuseentlüftung und -druckregelung nur ein einzelner Ölnebelabscheider und ein einzelnes Kurbelgehäusedruckregelventil benötigt werden. Damit wird ein weiterer Beitrag zu einer technisch einfachen Lösung geleistet.

Im Betrieb der Brennkraftmaschine treten aufgrund der Bewegung der Kolben in den Zylindern Druckpulsationen im Kurbelgehäuse der Brennkraftmaschine auf, die störend für die Kurbelgehäuseentlüftung und Kurbelgehäusedruckregelung sind. Um den störenden Einfluß dieser zwangsläufig im Kurbelgehäuse auftretenden Pulsationen zu mindern, wird vorgeschlagen, daß die den ersten Abschnitt bildende gemeinsame Leitung in ein als Pulsationsdämpfer wirkendes Resonatorvolumen mündet und daß vom Resonatorvolumen drei getrennte Leitungen als zweite Abschnitte der Kurbelgehäuseentlüftungsleitungen abgehen. Das Resonatorvolumen bewirkt eine Dämpfung der Pulsationen, was der gewünschten zuverlässigen und sicheren Funktion der Kurbelgehäuseentlüftung und Kurbelgehäusedruckregelung zugute kommt. Auch wird eine störende Fortpflanzung der Pulsationen bis in die Ansaugluftleitung der Brennkraftmaschine vermieden, so daß damit möglicherweise verbundene Funktionsstörungen der Brennkraftmaschine ebenfalls vermieden werden.

Aus dem Stand der Technik ist es bekannt, einen zur Brennkraftmaschine gehörenden Kraftstofftank mit einer Tankbelüftung über einen Aktivkohlefilter auszustatten, wobei der Aktivkohlefilter über ein Regenerierventil mit der Ansaugluftleitung verbindbar ist. Um ein Regenerieren des Aktivkohlefilters bei jedem Betriebszustand der Brennkraftmaschine zu ermöglichen, ist in Verbindung mit der erfindungsgemäßen Kurbelgehäuseentlüftung vorgesehen, daß eine vom Regenerierventil ausgehende Regeneriergasleitung in das Resonatorvolumen mündet. Bei dieser Ausführung genügt eine einzige Regeneriergasleitung, um den Aktivkohlefilter unabhängig vom aktuellen Betriebszustand der Brennkraftmaschine stets regenerieren zu können. Das durch die Regeneriergasleitung strömende, mit aus dem Aktivkohlefilter ausgespülten Schadstoffen befrachtete Regeneriergas wird zusammen mit dem Kurbelgehäuseentlüftungsgas in den jeweils passenden Bereich der Ansaugluftleitung geführt. Damit wird auf sehr einfache Weise eine wirksame und uneingeschränkte Regenerierung des Aktivkohlefilters ermöglicht.

Aus dem weiter oben schon beschrieben Stand der Technik ist es an sich bekannt, in der Ansaugluftleitung stromauf des Abgasturboladers eine Schubumluftklappe anzuordnen und den Kompressor in eine von der Ansaugluftleitung vor der Schubumluftklappe abgehenden und hinter der Schubumluftklappe wieder in die Ansaugluftleitung einmündenden Nebenleitung zu legen. Die Schubumluftklappe wird zwischen einer Schließstellung und einer Offenstellung umgeschaltet. Ihre offene Stellung nimmt die Schubumluftklappe immer dann ein, wenn der Kompressor außer Betrieb ist. Wenn der Kompressor in Betrieb ist, wird die Schubumluftklappe geschlossen. In Verbindung mit einer derartigen Anordnung schlägt die Erfindung vor, daß die dritte Kurbelgehäuseentlüftungsleitung stromauf des Kompressors in die Nebenleitung mündet. Hiermit wird insbesondere erreicht, daß die Einmündung der dritten Kurbelgehäuseentlüftung in die Nebenleitung in dem Bereich liegt, in dem der maximale Unterdruck bei Betrieb des Kompressors vorliegt, was eine besonders wirksame Kurbelgehäuseentlüftung bietet. Auch ist eine hohe Druckdiffenzen für eine wirksamen Ölbnebelabscheidung aus dem Kurbelgehäuseentlüftungsgas vorteilhaft.

Um eine Brennkraftmaschine möglichst schnell und einfach mit den für die Kurbelgehäuseentlüftung erforderlichen Einzelteilen versehen zu können, schlägt die Erfindung weiterhin bevorzugt vor, daß die drei Kurbelgehäuseentlüftungsleitungen mit ihren Ventilen in einem unter Herstellung der nötigen Strömungsverbindungen mit der Brennkraftmaschine verbindbaren Modul zusammengefaßt sind. Die Zusammenfassung der drei Kurbelgehäuseentlüftungsleitungen mit ihren Ventilen in einem Modul ergibt eine kompakte Bauweise und eine einfache Montage, da das Modul unter gleichzeitiger Herstellung der nötigen Strömungsverbindungen mit der Brennkraftmaschine verbunden werden kann. Die Strömungsverbindungen werden vorzugsweise mittels einer oder mehrerer Flanschverbindungen hergestellt, die zugleich den nötigen mechanischen Verbund bewirken.

Bevorzugt ist weiter vorgesehen, daß das Modul weiterhin den Ölnebelabscheider, das Kurbelgehäusedruckregelventil und das Resonatorvolumen enthält. Auf diese Weise werden noch mehr Einzelteile in das Modul integriert.

Ein noch höherer Integrationsgrad im Hinblick auf das Modul wird dann erreicht, wenn gemäß einer weiteren Ausgestaltung der Erfindung das Modul weiterhin das Regenerierventil und zumindest einen Abschnitt der den Aktivkohlefilter über das Regenerierventil mit dem Resonatorvolumen verbindenden Regeneriergasleitung enthält.

Zur Vermeidung oder Reduzierung von störenden Betriebsgeräuschen wird vorgeschlagen, daß im Resonatorvolumen akustisch wirksame Dämpfungselemente vorgesehen sind und/oder daß das Regenerierventil mit einer akustischen Kapselung versehen ist.

Auf dem Gebiet der Brennkraftmaschinen ist es bekannt, neben einer Kurbelgehäuseentlüftung auch eine Kurbelgehäusebelüftung mit Frischluft vorzusehen. Hierzu ist es üblich, daß eine Kurbelgehäusebelüftungsleitung zwischen dem Abgasturbolader und der Drosselklappe von der Ansaugluftleitung abzweigt und über ein Belüftungsventil in das Kurbelgehäuse der Brennkraftmaschine führt. Die Erfindung schlägt im Zusammenhang mit einer solchen Ausführung vor, daß zumindest ein Abschnitt der Kurbelgehäusebelüftungsleitung und das Belüftungsventil im Modul liegen. Auf diese Weise werden noch weitere Funktionen und Einzelteile in das Modul integriert, was die Fertigung der Brennkraftmaschine weiter vereinfacht.

Schließlich ist erfindungsgemäß noch vorgesehen, daß das im Modul liegende Belüftungsventil in der Kurbelgehäusebelüftungsleitung ein Rückschlagventil ist. Hiermit wird eine einfache Ausführung des Belüftungsventils ohne aktives Element für dessen Verstellung erreicht, was die Herstellungskosten niedrig hält und für eine hohe Zuverlässigkeit im Betrieb sorgt. Eine Belüftung des Kurbelgehäuses mit Frischluft erfolgt immer dann, wenn dafür geeignete Druckverhältnisse auf den beiden Seiten des als Belüftungsventils dienenden Rückschlagventils vorliegen. Eine Begrenzung des Volumens des Frischluftstroms nach oben kann dabei z.B. einfach durch eine Drossel im Verlauf der Belüftungsleitung erfolgen.

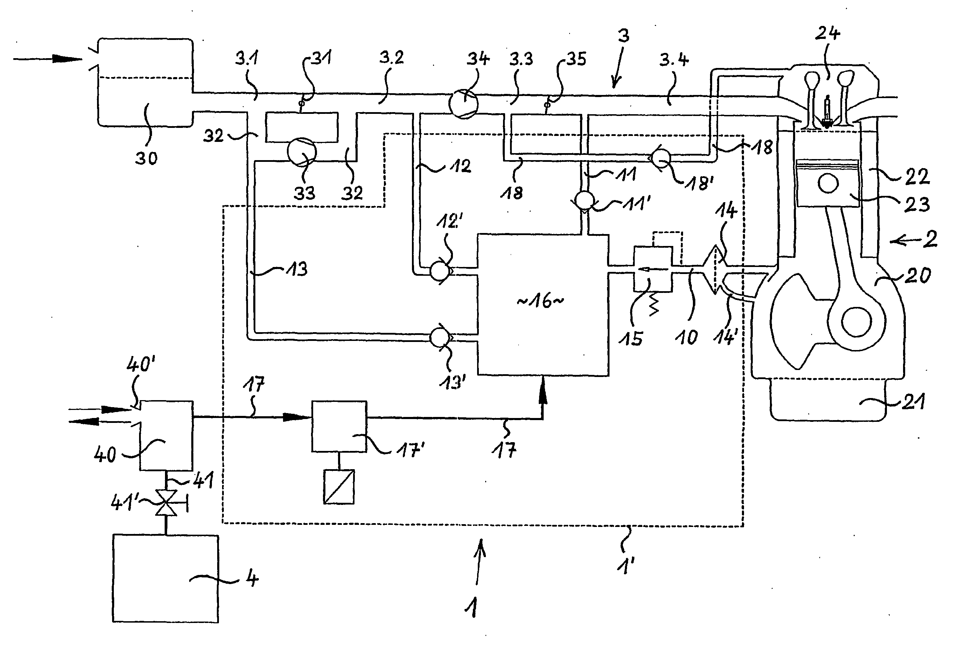

Im folgenden wir ein Ausführungsbeispiel der Erfindung anhand einer Zeichnung erläutert. Die einzige Zeichnungsfigur zeigt in schematischer Darstellung eine Brennkraftmaschine mit einem Abgasturbolader, mit einem Kompressor, mit einer Kurbelgehäuseentlüftung und mit weiteren zugehörigen Komponenten.

Die Zeichnungsfigur zeigt ganz rechts eine Brennkraftmaschine 2 mit einem Kurbelgehäuse 20, einer darunter liegenden Ölwanne 21, mindestens einem oberhalb des Kurbelgehäuses liegenden Zylinder 22, einem im Zylinder geführten Kolben 23 und einem den Zylinder 22 nach oben abschließenden Zylinderkopf 24.

Über eine Ansaugluftleitung 3 ist der Brennkraftmaschine 2 Frischluft für die Verbrennung zuführbar. Die Ansaugluft strömt aus der Atmosphäre zunächst durch einen Luftfilter 30, der mit einem Ansauggeräuschdämpfer kombiniert sein kann. In Strömungsrichtung der Ansaugluft gesehen folgt auf den Luftfilter 30 ein erster Abschnitt 3.1 der Ansaugluftleitung 3. Dieser erste Abschnitt 3.1 endet an einer Schubumluftklappe 31. Vor der Schubumluftklappe 31 zweigt eine Nebenleitung 32 von dem ersten Abschnitt 3.1 der Ansaugluftleitung 3 ab. Hinter der Schubumluftklappe 31 mündet die Nebenleitung 32 in einen zweiten Abschnitt 3.2 der Ansaugluftleitung 3.

Im Verlauf der Nebenleitung 32 liegt ein Kompressor 33, der von der Brennkraftmaschine, vorzugsweise über eine schaltbare Kupplung, bedarfsweise antreibbar ist. Wenn der Kompressor 33 in Betrieb ist, wird die Schubumluftplatte 31 in ihre in der Zeichnungsfigur dargestellte schließstellung gebracht. Wenn der Kompressor 33 außer Betrieb ist, befindet sich die Schubumluftklappe 31 in ihrer Öffnungsstellung.

Der zweite Abschnitt 3.2 der Ansaugluftleitung 3 endet an dem Lufteingang eines Abgasturboladers 34, an den sich in Strömungsrichtung der Ansaugluft gesehen ein dritter Abschnitt 3.3 der Ansaugluftleitung 3 anschließt.

Der dritte Abschnitt 3.3 der Ansaugluftleitung 3 endet an einer Drosselklappe 35. Zwischen der Drosselklappe 35 und der Brennkraftmaschine 2 liegt ein vierter Abschnitt 3.4 der Ansaugluftleitung 3.

Weiterhin ist in der Zeichnungsfigur eine Kurbelgehäuseentlüftung 1 dargestellt, die dazu dient, Kurbelgehäuseentlüftungsgas oder sogenannte Blow-by-Gas aus dem Kurbelgehäuse 20 abzuführen und das abgeführte Kurbelgehäuseentlüftungsgas nach Abscheidung von Ölnebel in die Ansaugluftleitung 3 einzuleiten. Das Kurbelgehäuseentlüftungsgas gelangt dann zusammen mit der Ansaugluft in die Brennräume der Brennkraftmaschine 2.

Zur Ableitung des Kurbelgehäuseentlüftungsgases aus dem Kurbelgehäuse 20 dient eine erste Kurbelgehäuseentlüftungsleitung 10, die einerseits mit dem Kurbelgehäuse 20 und andererseits mit einem Resonatorvolumen 16 verbunden ist. Im Verlauf der Leitung 10 liegt zunächst ein Ölnebelabscheider 14, von dem aus eine Ölrückführleitung 14' in das Kurbelgehäuse 20 führt, durch welche im Ölnebelabscheider 14 abgetrenntes Ö1 aus dem Kurbelgehäuseentlüftungsgas wieder in das Kurbelgehäuse 20 und in die darunter liegende Ölwanne 21 geführt werden kann.

Im weiteren Verlauf der Leitung 10 folgt dann ein Kurbelgehäusedruckregelventil 15, mit dem der Druck im Kurbelgehäuse 20 auf einen vorgebbaren, üblicherweise knapp unter dem Umgebungsluftdruck liegenden Druck geregelt wird.

Die Leitung 10 mündet schließlich in das Resonatorvolumen 16, das als Pulsationsdämpfer zur Verminderung der im Kurbelgehäuse 20 durch die Bewegung des Zylinders oder der Zylinder 23 zwangsläufig auftretenden Pulsationen des Kurbelgehäuseentlüftungsgases dient.

Vom Resonatorvolumen 16 führen hier insgesamt drei Kurbelgehäuseentlüftungsleitungen 11, 12 und 13 zur Ansaugluftleitung 3.

Die erste Kurbelgehäuseentlüftungsleitung 11 führt in den vierten Abschnitt 3.4 der Ansaugluftleitung 3, mündet also stromab der Drosselklappe 35 in die Ansaugluftleitung 3 ein.

Die zweite Kurbelgehäuseentlüftungsleitung 12 mündet in den zweiten Abschnitt 3.2 der Ansaugluftleitung 3, mündet also stromab der Schubumluftklappe 31 und stromauf des Abgasturboladers 34 in die Ansaugluftleitung 3 ein.

Die dritte Kurbelgehäuseentlüftungsleitung 13 schließlich mündet stromauf des Kompressors 33 in die Nebenleitung 32, die von dem ersten Abschnitt 3.1 der Ansaugluftleitung 3 abzweigt.

Durch diese drei Kurbelgehäuseentlüftungsleitungen 11 bis 13 wird jederzeit eine wirksame Entlüftung des Kurbelgehäuses 20 erreicht. Bei Saugbetrieb der Brennkraftmaschine 2, also bei geschlossener oder nur teilweise geöffneter Drosselklappe 35, herrscht im vierten Abschnitt 3.4 der Ansaugluftleitung 3 der geringste Druck, so daß in diesem Betriebszustand das Kurbelgehäuseentlüftungsgas durch die erste Kurbelgehäuseentlüftungsleitung 11 strömt.

Wenn der Abgasturbolader 34 in Betrieb ist, wofür ein Überschreiten einer Mindestdrehzahl erforderlich ist, herrscht im zweiten Abschnitt 3.2 der Ansaugluftleitung 3 der niedrigste Druck, so daß in diesem Betriebszustand der Brennkraftmaschine 2 die Kurbelgehäuseentlüftungsgase durch die zweite Kurbelgehäuseentlüftungsleitung 12 strömen.

Wenn der Kompressor 33 in Betrieb ist, was bei niedriger Drehzahl und hoher Last der Brennkraftmaschine 2 üblicherweise der Fall ist, herrscht im ersten Abschnitt 3.1 der Ansaugluftleitung 3 und in dem stromauf des Kompressors 33 liegenden Teil der Nebenleitung 32 der niedrigste Druck, so daß in diesem Betriebszustand der Brennkraftmaschine 2 die Kurbelgehäuseentlüftungsgase durch die dritte Kurbelgehäuseentlüftungsleitung 13 strömen.

In allen drei Kurbelgehäuseentlüftungsleitungen 11 bis 13 ist jeweils ein eigenes Rückschlagventil 11', 12', 13' vorgesehen. Die Rückschlagventile 11', 12', 13' sorgen dafür, daß selbsttätig der jeweils geeignete Strömungsweg für die Kurbelgehäueentlüftungsgase eingestellt wird und daß eine Gasströmung durch die Kurbelgehäuseentlüftungsleitungen 11 bis 13 nur in einer Strömungsrichtung vom Resonatorvolumen 16 in Richtung zur Ansaugluftleitung 3 möglich ist.

Links unten in der Zeichnungsfigur ist ein Kraftstofftank 4 dargestellt, der zur Brennkraftmaschine 2 gehört. Mittels einer Entlüftungsleitung 41 mit einem Ventil 41' ist der Kraftstofftank 4 über einen Aktivkohlefilter 40 mit einer Lufteinlaß- und Luftauslaßöffnung 40' entlüftbar. Von dem Aktivkohlefilter 40 geht eine Regeneriergasleitung 17 ab, die über ein Regenerierventil 17' mit dem Resonatorvolumen 16 verbunden ist. Zum Zweck der Regenerierung des Aktivkohlefilters 40 kann bei geöffneten Regenerierventil 17' Frischluft durch den Lufteinlaß 40' in den Aktivkohlefilter 40 einströmen. Die Frischluft umströmt dort die Aktivkohlepartikel und nimmt die daran angelagerten Schadstoffe mit. Das so entstandene Regeneriergas strömt durch die Regeneriergasleitung 17 und das offene Regenerierventil 17' in das Resonatorvolumen 16. Von dort strömt das Regeneriergas zusammen mit dem Kurbelgehäuseentlüftungsgas durch die jeweils entsprechend dem aktuellen Betriebszustand der Brennkraftmaschine 2 durchströmte Kurbelgehäuseentlüftungsleitung 11, 12 oder 13 in die Ansaugluftleitung 3.

Aus dem dritten Abschnitt 3.3 der Ansaugluftleitung 3 zweigt stromab des Abgasturboladers 34 eine Kurbelgehäusebelüftungsleitung 18 ab, die hier mit dem Zylinderkopf 24 der Brennkraftmaschine 2 verbunden ist, wobei der Zylinderkopf 24 in Gasströmungsverbindung mit dem Kurbelgehäuse 20 steht. Durch die Kurbelgehäusebelüftungsleitung 18 kann Frischluft in das Kurbelgehäuse 20 der Brennkraftmaschine 2 eingeleitet werden. Im Verlauf der Kurbelgehäusebelüftungsleitung 18 ist ein Belüftungsventil 18' im Form eines Rückschlagventils angeordnet. Dieses Belüftungsventil 18' erlaubt eine Luftströmung nur in Richtung von der Ansaugluftleitung 3 zur Brennkraftmaschine 2. Eine Frischluftströmung durch die Kurbelgehäusebelüftungsleitung 18 stellt sich selbsttätig immer dann ein, wenn der Luftdruck im dritten Abschnitt 3.3 der Ansaugluftleitung 3 stromab des Turboladers 34 höher ist als der aktuelle Druck im Kurbelgehäuse 20.

Wie durch eine gestrichelte Linie in der Zeichnungsfigur angedeutet ist, sind die drei Kurbelgehäuseentlüftungsleitungen 11 bis 13 mit ihren Ventilen 11' bis 13', die gemeinsame Leitung 10 mit dem Ölnebelabscheider 14 und seiner Ölrückführleitung 14', das Kurbelgehäusedruckregelventil 15, ein Abschnitt der Regeneriergasleitung 17 mit dem Regenerierventil 17' und ein Abschnitt der Kurbelgehäusebelüftungsleitung 18 mit ihrem Belüftungsventil 18' zu einem Modul 1' zusammengefaßt. Dieses Modul 1' bildet eine vorgefertigte Baueinheit, die unter Herstellung der benötigten Strömungsverbindungen mit der Brennkraftmaschine 2 verbunden werden kann. Die Verbindung erfolgt vorzugsweise über eine Flanschverbindung, in der die benötigten Strömungswege liegen und die gleichzeitig für einen mechanischen Zusammenhalt des Moduls 1' und der Brennkraftmaschine 2 sorgt.

## Patentansprüche

1. Kurbelgehäuseentlüftung (1) für eine Brennkraftmaschine (2) mit einem Abgasturbolader (34), wobei in einer Ansaugluftleitung (3) der Brennkraftmaschine (2) in Ansaugluftströmungsrichtung gesehen hinter dem Abgasturbolader (34) eine Drosselklappe (35) angeordnet ist, mit einer ersten und einer zweiten Kurbelgehäuseentlüftungsleitung (11, 12), die einerseits mit dem Kurbelgehäuse (20) und andererseits. über je ein Ventil (11', 12') mit der Ansaugluftleitung .(3.) verbunden sind, wobei die erste Kurbelgehäuseentlüftungsleitung (11) stromab der Drosselklappe (35) und die zweite Kurbelgehäuseentlüftungsleitung (12) stromauf des Abgasturboladers (34) in die Ansaugluftleitung (3) mündet,
**dadurch gekennzeichnet,**
**daß** eine dritte Kurbelgehäuseentlüftungsleitung (13) vorgesehen ist, die einerseits mit dem Kurbelgehäuse (20) und andererseits über ein Ventil (13') mit der Ansaugluftleitung (3) stromauf eines bei der Brennkraftmaschine (2) zusätzlich vorgesehenen, stromauf des Abgasturboladers (34) in der Ansaugluftleitung (3) liegenden Kompressors (33) verbunden ist.

2. Kurbelgehäuseentlüftung nach Anspruch 1, **dadurch gekennzeichnet, daß** die Ventile (11', 12', 13'), über die die Kurbelgehäuseentlüftungsleitungen (10, 11, 12) jeweils mit der Ansaugluftleitung (3) verbunden sind, Rückschlagventile sind.

3. Kurbelgehäuseentlüftung nach Anspruch 1 oder 2, **dadurch gekennzeichnet, daß** die drei Kurbelgehäuseentlüftungsleitungen (10, 11, 12) in einem vom Kurbelgehäuse (20) ausgehenden ersten Abschnitt (10) durch eine gemeinsame Leitung gebildet sind und daß.im Verlauf dieses ersten Abschnitts (10) ein Ölnebelabscheider (14) und ein Kurbelgehäusedruckregelventil (15) angeordnet sind.

4. Kurbelgehäuseentlüftung nach Anspruch 3, **dadurch gekennzeichnet, daß** die den ersten Abschnitt (10) bildende gemeinsame Leitung in ein als Pulsationsdämpfer wirkendes Resonatorvolumen (16) mündet und daß vom Resonatorvolumen (16) drei getrennte Leitungen als zweite Abschnitte der Kurbelgehäuseentlüftungsleitungen (11, 12, 13) abgehen.

5. Kurbelgehäuseentlüftung nach Anspruch 4, wobei ein zur Brennkraftmaschine (2) gehörender Kraftstofftank (4) mit einer Tankbelüftung über einen Aktivkohlefilter (40) ausgestattet ist und wobei der Aktivkohlefilter (40) über ein Regenerierventil (17') mit der Ansaugluftleitung (3) verbindbar ist, **dadurch gekennzeichnet, daß** eine vom Regenerierventil (17') ausgehende Regeneriergasleitung (17) in das Resonatorvolumen (16) mündet.

6. Kurbelgehäuseentlüftung nach einem der vorherigen Ansprüche, wobei in der Ansaugluftleitung (3) stromauf des Abgasturboladers (34) eine Schubumluftklappe (31) angeordnet ist und wobei der Kompressor (33) in einer von der Ansaugluftleitung (3) vor der Schubumluftklappe (31) abgehenden und hinter der Schubumluftklappe (31) wieder in die Ansaugluftleitung (3) einmündenden Nebenleitung (32) liegt, **dadurch gekennzeichnet, daß** die dritte Kurbelgehäuseentlüftungsleitung (13) stromauf des Kompressors (33) in die Nebenleitung (32) mündet.

7. Kurbelgehäuseentlüftung nach einem der vorherigen Ansprüche, **dadurch gekennzeichnet, daß** die drei Kurbelgehäuseentlüftungsleitungen (11, 12, 13) mit ihren Ventilen (11', 12', 13') in einem unter Herstellung der nötigen Strömungsverbindungen mit der Brennkraftmaschine (2) verbindbaren-Modul (1') zusammengefaßt sind.

8. Kurbelgehäuseentlüftung nach Anspruch 7; **dadurch gekennzeichnet, daß** das Modul (1') weiterhin den Ölnebelabscheider (14), das Kurbelgehäusedruckregelventil (15) und das Resonatorvolumen (16) enthält.

9. Kurbelgehäuseentlüftung nach Anspruch 5 und nach Anspruch 7 oder 8, **dadurch gekennzeichnet, daß** das Modul (1') weiterhin das Regenerierventil (17.') und zumindest einen Abschnitt der den Aktivkohlefilter (40) über das Regenerierventil (17') mit dem Resonatorvolumen (16) verbindenden Regeneriergasleitung (17) enthält.

10. Kurbelgehäuseentlüftung nach einem der Ansprüche 7 bis 9, **dadurch gekennzeichnet, daß** im Resonatorvolumen (16) akustisch wirksame Dämpfungselemente vorgesehen sind und/oder daß das Regenerierventil (17') mit einer akustischen Kapselung versehen ist.

11. Kurbelgehäuseentlüftung nach einem der Ansprüche 7 bis 10, wobei eine Kurbelgehäusebelüftungsleitung (18) zwischen dem Abgasturbolader (34) und der Drosselklappe (35) von der Ansaugluftleitung (3) abzweigt und über ein Belüftungsventil (18') in das Kurbelgehäuse (20) der Brennkraftmaschine (2) führt, **dadurch gekennzeichnet, daß** zumindest ein Abschnitt der Kurbelgehäusebelüftungsleitung (18) und das Belüftungsventil (18') im Modul (1') liegen.

12. Kurbelgehäuseentlüftung nach Anspruch 11, **dadurch gekennzeichnet, daß** das im Modul (1') liegende Belüftungsventil (18') in der Kurbelgehäusebelüftungsleitung (18) ein Rückschlagventil ist.

## Claims

1. Crankcase ventilator (1) for an internal combustion engine (2) comprising an exhaust gas turbocharger (34), wherein a throttle valve (35) is provided in an intake air line (3) of the internal combustion engine (2) seen in the direction of the intake air flow behind the exhaust gas turbocharger (34), with one first and one second crankcase ventilator line (11, 12) which are connected with the crankcase (20) on the one hand and, on the other hand, via one valve each (11', 12'), with the intake air line (3), wherein the first crankcase ventilator line (11) runs downstream of the throttle valve (35) and the second crankcase ventilator line (12) upstream of the exhaust gas turbocharger (34) into the intake air line (3), **characterized in that** a third crankcase ventilator line (13) is provided which is connected, on the one hand, with the crankcase (20) and, on the other hand, via a valve (13') with the intake air line (3) upstream of a compressor (33) which is located in the intake air line (3) upstream of the exhaust gas turbocharger (34) and is additionally provided with the internal combustion engine (2).

2. Crankcase ventilator according to claim 1, **characterized in that** the valves (11', 12', 13') are non-return valves by means of which the crankcase ventilator lines (10, 11, 12) are each connected with the intake air line (3).

3. Crankcase ventilator according to claim 1 or 2, **characterized in that** the three crankcase ventilator lines (10, 11, 12) are formed - in a first section (10) leaving from the crankcase (20) - by a joint line, and that, in the course of this first section (10), an oil mist separator (14) and a crankcase pressure control valve (15) are provided.

4. Crankcase ventilator according to claim 3, **characterized in that** the joint line forming the first section (10) runs into a resonator volume (16) acting as a pulsation damper, and that three separate lines leave from the resonator volume (16) as the second sections of the crankcase ventilator lines (11, 12, 13).

5. Crankcase ventilator according to claim 4, wherein a fuel tank (4) belonging to an internal combustion engine (2) is provided with a tank vent via an activated carbon filter (40) and wherein the activated carbon filter (40) can be connected via a regenerating valve (17') with the intake air line (3), **characterized in that** a regenerating gas line (17) leaving from the regenerating valve (17') runs into the resonator volume (16).

6. Crankcase ventilator according to any one of the preceding claims, wherein a recirculating air flap (31) is arranged upstream of the exhaust gas turbocharger (34) in the intake air line (3), and wherein the compressor (33) is provided in a secondary line (32) which leaves from the intake air line (3) in front of the recirculating air flap (31) and runs again into the intake air line (3) behind the recirculating air flap (31), **characterized in that** the third crankcase ventilator line (13) runs upstream of the compressor (33) into the secondary line (32).

7. Crankcase ventilator according to any one of the preceding claims, **characterized in that** the three crankcase ventilator lines (11, 12, 13) with their valves (11', 12', 13') are combined in a module (1') connectable with the internal combustion engine (2) by establishing the necessary flow connections.

8. Crankcase ventilator according to claim 7, **characterized in that** the module (1') furthermore comprises the oil mist separator (14), the crankcase pressure control valve (15) and the resonator volume (16).

9. Crankcase ventilator according to claim 5 and according to claim 7 or 8, **characterized in that** the module (1') furthermore comprises the regenerating valve (17') and at least one section of the regenerating gas line (17) connecting the activated carbon filter (40) with the resonator volume (16) via the regenerating valve (17').

10. Crankcase ventilator according to any of the claims 7 to 9, **characterized in that** acoustically effective damping elements are provided in the resonator volume (16) and/or that the regenerating valve (17') is provided with an acoustic encapsulation.

11. Crankcase ventilator according to any of the claims 7 to 10, wherein one crankcase ventilation line (18) branches off from the intake air line (3) between the exhaust gas turbocharger (34) and the throttle valve (35) and runs, via a ventilation valve (18'), into the crankcase (20) of the internal combustion machine (2), **characterized in that** at least one section of the crankcase ventilation line (18) and the ventilation valve (18') are located in the module (1').

12. Crankcase ventilator according to claim 11, **characterized in that** the ventilation valve (18') in the crankcase ventilator line (18) located in the module (1') is a non-return valve.

## Revendications

1. Ventilation de carter de vilebrequin (1) destinée à un moteur à combustion interne (2) comportant un turbocompresseur de gaz d'échappement (34), un clapet d'étranglement (35), dans une conduite d'air aspiré (3) du moteur à combustion interne (2), étant, vu dans le sens de l'écoulement de l'air aspiré, situé derrière le turbocompresseur de gaz d'échappement (34), comprenant une première et une deuxième conduites de ventilation de carter de vilebrequin (11, 12) qui sont reliées d'une part au carter de vilebrequin (20) et, d'autre part, à la conduite d'air aspiré (3) via respectivement une soupape (11', 12'), la première conduite de ventilation de carter de vilebrequin (11) débouchant en aval du clapet d'étranglement (35) et la deuxième conduite de ventilation de carter de vilebrequin (12) débouchant en amont du turbocompresseur de gaz d'échappement (34) dans la conduite d'air aspiré (3), **caractérisée en ce qu'**est prévue une troisième conduite de ventilation de carter de vilebrequin (13) qui est reliée, d'une part, au carter de vilebrequin (20) et, d'autre part, via une soupape (13'), à la conduite d'air aspiré (3) en amont d'un compresseur (33) prévu additionnellement au niveau du moteur à combustion interne (2) et situé en amont du turbocompresseur de gaz d'échappement (34) dans la conduite d'air aspiré (3).

2. Ventilation de carter de vilebrequin selon la revendication 1, **caractérisée en ce que** les soupapes (11', 12', 13') via lesquelles les conduites de ventilation de carter de vilebrequin (10, 11, 12) sont chacune reliées à la conduite d'air aspiré (3) sont des soupapes de non-retour.

3. Ventilation de carter de vilebrequin selon la revendication 1 ou 2, **caractérisée en ce que** les conduites de ventilation de carter de vilebrequin (10, 11, 12) sont constituées par une conduite commune dans une première section (10) partant du carter de vilebrequin (20) et **en ce que** sont situés, sur le tracé de cette première section (10), un séparateur de brouillard d'huile (14) et une soupape de réglage de la pression du carter de vilebrequin (15).

4. Ventilation de carter de vilebrequin selon la revendication 3, **caractérisée en ce que** la conduite commune constituant la première section (10) débouche dans un volume de résonateur (16) qui agit en tant qu'amortisseur de pulsations et **en ce que** partent, du volume de résonateur (16), trois conduites séparées en tant que deuxièmes sections des conduites de ventilation de carter de vilebrequin (11, 12, 13).

5. Ventilation de carter de vilebrequin selon la revendication 4, **caractérisée en ce qu'**un réservoir de carburant (4) faisant partie du moteur à combustion interne (2) est équipé d'une ventilation de réservoir via un filtre au carbone actif (40) et le filtre au carbone actif (40) pouvant être relié à la conduite d'air aspiré (3) via une soupape de régénération (17'), **caractérisée en ce qu'**une conduite de gaz de régénération (17) partant de la soupape de régénération (17') débouche dans le volume de résonateur (16).

6. Ventilation de carter de vilebrequin selon l'une des revendications précédentes, une soupape de recirculation (31) étant située dans la conduite d'air aspiré (3) en amont du turbocompresseur de gaz d'échappement (34) et le compresseur (33) se trouvant dans une conduite secondaire (32) qui part de la conduite d'air aspiré (3) devant la soupape de recirculation (31) et débouche, derrière la soupape de recirculation (31), de nouveau dans la conduite d'air aspiré (3), **caractérisée en ce que** la troisième conduite de ventilation de carter de vilebrequin (13) débouche dans la conduite secondaire (32) en amont du compresseur (33).

7. Ventilation de carter de vilebrequin selon l'une des revendications précédentes, **caractérisée en ce que** les trois conduites de ventilation de carter de vilebrequin (11, 12, 13), avec leurs soupapes (11', 12', 13'), sont regroupées en un module (1') pouvant être relié au moteur à combustion interne (2) moyennant l'établissement des liaisons fluidiques nécessaires.

8. Ventilation de carter de vilebrequin selon la revendication 7, **caractérisée en ce que** le module (1') contient, en outre, le séparateur de brouillard d'huile (14), la soupape de réglage de la pression du carter de vilebrequin (15) et le volume de résonateur (16).

9. Ventilation de carter de vilebrequin selon la revendication 5 et selon la revendication 7 ou 8, **caractérisée en ce que** le module (1') contient, en outre, la soupape de régénération (17') et au moins une section de la conduite de gaz de régénération (17) reliant le filtre au carbone actif (40) au volume de résonateur (16) via la soupape de régénération (17').

10. Ventilation de carter de vilebrequin selon l'une des revendications 7 à 9, **caractérisée en ce que** sont prévus, dans le volume de résonateur (16), des éléments d'amortissement acoustiquement actifs et/ou **en ce que** la soupape de régénération (17') est pourvue d'un encapsulage acoustique.

11. Ventilation de carter de vilebrequin selon l'une des revendications 7 à 10, une conduite de ventilation de carter de vilebrequin (18) partant de la conduite d'air aspiré (3) entre le turbocompresseur de gaz d'échappement (34) et le clapet d'étranglement (35) et menant au carter de vilebrequin (20) du moteur à combustion interne (2) via une soupape de ventilation (18'), **caractérisée en ce qu'**au moins une section de la conduite de ventilation de carter de vilebrequin (18) et la soupape de ventilation (18') se trouvent dans le module (1').

12. Ventilation de carter de vilebrequin selon la revendication 11, **caractérisée en ce que** la soupape de ventilation (18') située dans le module (1'), dans la conduite de ventilation du carter de vilebrequin (18), est une soupape de non-retour.
